# FASCICULE DE BREVET EUROPEEN

(11) **EP 0 699 580 B1**
(45) Date de publication et mention de la délivrance du brevet: **27.01.1999**
(21) Numéro de dépôt: 95401963.4
(22) Date de dépôt: 28.08.1995
(51) Int. Cl.: B64G 1/64

(54) **Dispositif de commande d'écartement multicontact, applicable notamment à l'éjection d'un objet à partir d'un engin spatial**
Multikontakt-Antriebstrennvorrichtung insbesondere zur Anwendung beim Aussetzen eines Objektes aus einem Raumfahrzeug
Multicontact separation drive mechanism, particularly applicable to the ejection of an object from a spacecraft

(30) Priorité: 30.08.1994 FR 9410424
(43) Date de publication de la demande: 06.03.1996
(73) Titulaire: AEROSPATIALE Société Nationale Industrielle, 75781 Paris Cédex 16 (FR)
(72) Inventeur: Geyer, Freddy, F-83440 Tanneron (FR); Vezain, Gérard, F-06210 Mandelieu (FR); Roux, Christian, F-60130 Grasse (FR)
(74) Mandataire: Poulin, Gérard

(56) Documents cités:
- EP-A- 0 454 545
- EP-A- 0 469 939
- FR-A- 2 654 701
- US-A- 3 196 745

## Description

L'invention concerne un dispositif conçu pour commander l'écartement de deux organes normalement maintenus en contact l'un avec l'autre, en perturbant le moins possible l'attitude de ces organes au moment de leur séparation.

Un tel dispositif trouve une application privilégiée dans le lancement et la mise à poste d'objets tels que des satellites, des sondes, etc. à partir d'un engin de transport spatial tel qu'un lanceur, une sonde interplanétaire, etc..

Lors de l'éjection d'un objet, notamment dans l'espace, trois paramètres doivent être maîtrisés. Il s'agit de la direction d'éjection, de la vitesse d'éjection et de l'attitude de l'objet.

Le premier paramètre est maîtrisé traditionnellement grâce au positionnement de l'axe du dispositif de commande d'écartement par rapport à l'axe de l'engin spatial. La maîtrise de la vitesse est obtenue quant à elle par une bonne connaissance des énergies motrices. Enfin, l'attitude de l'objet est généralement contrôlée par la mise en rotation de cet objet autour de son axe, appelée mouvement de spin.

Cependant, le mouvement de spin de l'objet est généralement très insuffisant pour maîtriser son attitude. En effet, la mise en vitesse de l'objet lors de son éjection produit des déformations internes et/ou externes au dispositif de commande d'écartement. Ces déformations ont notamment pour origine des phénomènes d'action- réaction, des chocs internes, etc.. Pendant la phase de mise en vitesse de l'objet, au cours de laquelle ce dernier est en contact avec le dispositif de commande d'écartement, ces déformations ont tendance à engendrer une vitesse transverse qui fait tourner l'objet autour de son centre de gravité.

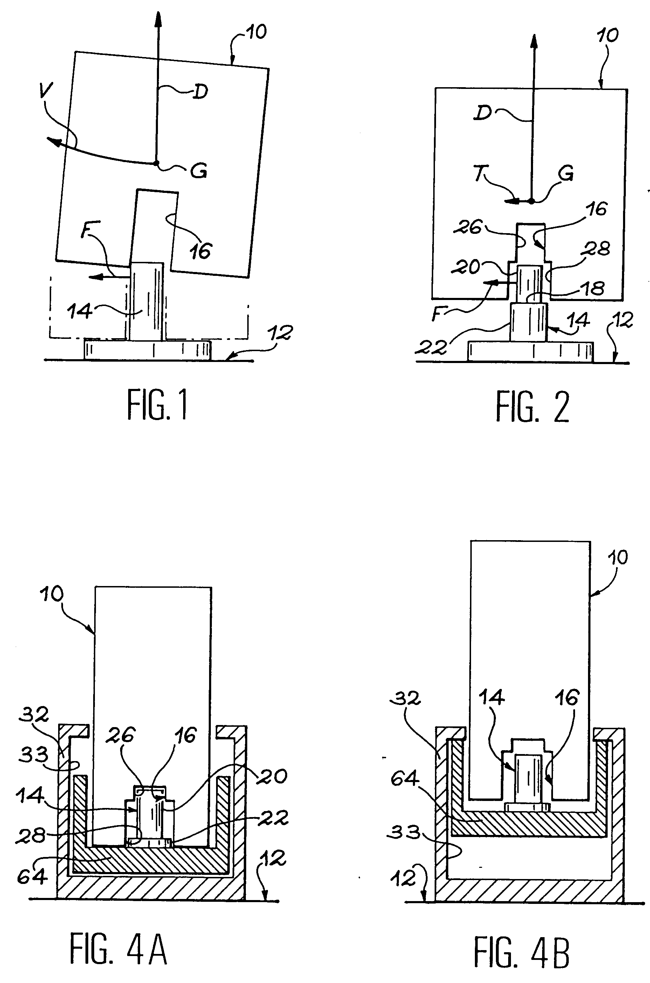

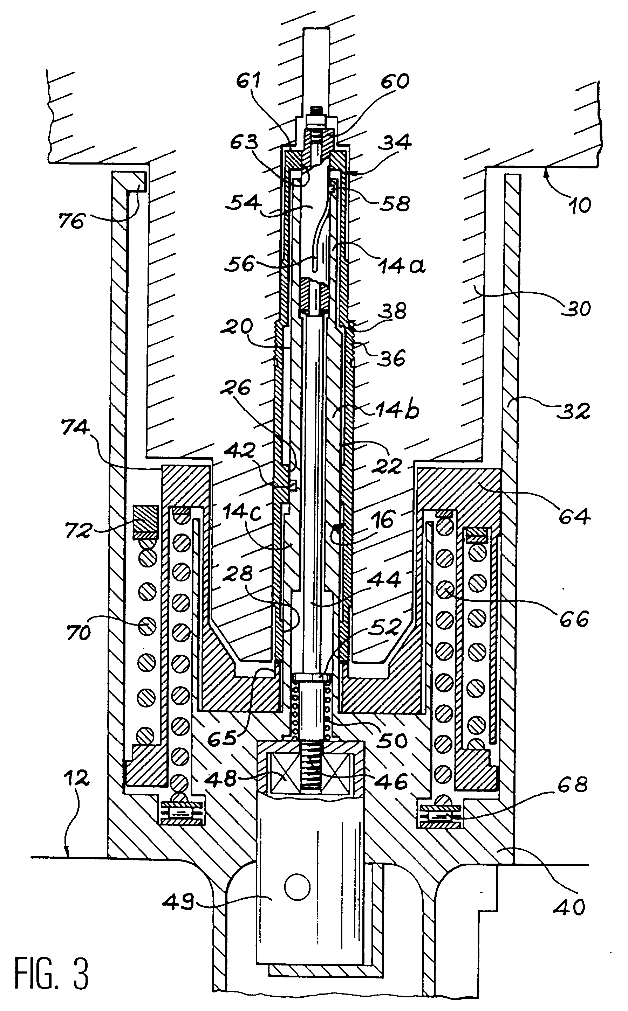

Ce comportement perturbant l'attitude de l'objet éjecté est illustré très schématiquement sur la figure 1. Sur cette figure, la référence 10 désigne un objet tel qu'un satellite ou une sonde. Cet objet 10 est représenté au moment où son contact avec l'engin spatial 12 qui le supportait initialement est interrompu.

Afin de maîtriser au mieux la direction dans laquelle est éjecté l'objet 10 et d'engendrer éventuellement un mouvement de spin de cet objet lors de l'éjection, l'engin spatial 12 porte un mât 14 habituellement intégré au dispositif de commande d'écartement (non représenté). Ce mât 14 constitue un mât de guidage de l'objet 10 lors de son éjection. A cet effet, il est emboîté dans un alésage 16 de section complémentaire, associé à l'objet 10, avant l'éjection de ce dernier.

Lorsque l'éjection de l'objet 10 est commandée, la coopération du mât 14 de guidage avec l'alésage 16 permet de contrôler la direction D selon laquelle l'objet 10 est éjecté. En équipant l'alésage 16 d'une rampe hélicoïdale dans laquelle est reçu un doigt solidaire du mât 14, on engendre en outre un mouvement de spin de l'objet 10 correspondant à une rotation de ce dernier autour d'un axe confondu avec la direction d'éjection D. Le mouvement de spin de l'objet 10 autour de cet axe peut aussi être engendré par un composant séparé tel qu'un moteur électrique, un ressort, un vérin à gaz, etc..

Dans les réalisations existantes illustrées de façon très schématique par la figure 1, le mât de guidage 14 est un mât cylindrique, de section circulaire, qui présente un diamètre uniforme sur toute sa longueur. Pour bien maîtriser la direction d'éjection D, la longueur du mât 14 doit être relativement importante alors que son diamètre doit rester relativement faible, notamment pour limiter l'encombrement. L'actionnement du dispositif de commande d'écartement engendre des chocs et des déformations qui peuvent donc se traduire par des mouvements de flexion du mât de guidage 14 symbolisés par la flèche F sur la figure 1.

Si un tel mouvement de flexion du mât de guidage 14 se produit juste au moment où ce mât cesse d'être en contact avec l'alésage 16, une vitesse de rotation transverse de l'objet 10 autour de son centre de gravité G, symbolisée par la flèche V sur la figure 1 est donc engendrée. Cette composante de vitesse transverse V associée au mouvement de spin de l'objet 10 autour de l'axe de l'alésage 16 crée un mouvement composé dit de "Poinsot" dont l'amplitude peut être relativement importante. Par conséquent, la maîtrise de l'attitude de l'objet 10 après son lancement n'est pas assurée de façon satisfaisante, malgré le mouvement de spin communiqué à cet objet.

Bien entendu, l'inconvénient qui vient d'être mentionné pour un objet animé d'un mouvement de spin après son lancement est encore plus important dans le cas du lancement d'un objet sans mouvement de spin.

Dans le document EP-A-0 454 545, un objet est vissé sur l'extrémité avant d'un réceptacle dont le corps est fixé à un support. L'objet est séparé du support, par une tige d'éjection qui coulisse dans le réceptacle, lorsque l'éjection est commandée. La tige d'éjection traverse axialement l'extrémité avant du réceptacle et prend appui dans une zone de centrage avant située au fond d'un logement cylindrique formé dans l'objet, à proximité de son centre de gravité. La séparation est assurée par la rupture d'une zone frangible prévue dans le réceptacle, entre l'extrémité avant et le corps de celui-ci. Une zone de centrage arrière est également formée à l'entrée du logement, pour une partie du corps du réceptacle attenante à la zone frangible. Lors de l'éjection, le centrage arrière disparaît, de sorte que le centrage est limité à la zone de centrage avant, au niveau du centre de gravité de l'objet.

L'invention a précisément pour objet un dispositif de commande d'écartement, appliqué notamment au lancement d'un objet à partir d'un engin spatial, permettant de réduire à une valeur minimale la vitesse de rotation transverse communiquée à l'objet lors de son éjection, c'est-à-dire l'amplitude du mouvement de Poinsot dans le cas où l'objet est animé d'un mouvement de spin, afin de garantir une attitude correcte de l'objet éjecté.

Conformément à l'invention ce résultat est obtenu au moyen d'un dispositif de commande d'écartement de deux organes normalement maintenus en contact l'un avec l'autre, ce dispositif comprenant des moyens d'éjection aptes à appliquer entre les organes une force tendant à les écarter l'un de l'autre, lesdits organes étant normalement en contact par au moins deux paires de surfaces cylindriques complémentaires, de génératrice parallèles à ladite force, caractérisé par le fait que les deux paires de surfaces cylindriques complémentaires sont agencées de façon à perdre contact simultanément lors d'une mise en oeuvre des moyens d'éjection.

Du fait que les deux organes sont en contact simultanément par au moins deux paires de surfaces cylindriques complémentaires orientées parallèlement à la force d'éjection, et que toutes ces surfaces perdent le contact simultanément lors de l'éjection, les vibrations et les chocs qui se produisent lors de l'éjection ne peuvent pratiquement pas engendrer une vitesse de rotation transverse comparable à la vitesse V sur la figure 1. Seul un mouvement de translation dans le sens de la flexion transversale F du mât est transmis à l'objet. Une maîtrise de l'attitude de l'objet éjecté très supérieure à la maîtrise assurée par les techniques existantes est ainsi obtenue.

Dans une forme de réalisation préférentielle de l'invention, les surfaces cylindriques complémentaires ont des bases circulaires de diamètres différents, d'une paire à l'autre.

Ainsi, chaque paire de surfaces cylindriques complémentaires comprend avantageusement une première surface formée sur un élément mâle lié à un premier des organes et une deuxième surface formée sur un élément femelle lié au deuxième organe.

Dans un premier exemple de réalisation de l'invention, l'élément mâle forme un mât de guidage fixé rigidement au premier organe et l'élément femelle un tube de guidage fixé rigidement au deuxième organe.

Dans ce cas, le dispositif comprend avantageusement deux paires de surfaces cylindriques complémentaire étagées, la première surface de l'une des paires étant formée sur une première partie cylindrique de relativement petit diamètre du mât de guidage et se prolongeant entre des cannelures d'une partie intermédiaire cannelée du mât de guidage, alors que la première surface de l'autre paire est formée sur une deuxième partie cylindrique, de relativement grand diamètre du mât de guidage et se prolonge sur lesdites cannelures.

Dans cet exemple de réalisation de l'invention le mât de guidage peut coopérer avec le tube de guidage par des moyens de guidage hélicoïdal permettant d'engendrer un mouvement de spin de l'un des objets par rapport à l'autre.

Dans un autre exemple de réalisation de l'invention, les moyens d'éjection comprennent un piston éjecteur monté coulissant dans le premier organe. L'élément mâle forme alors un mât de centrage fixé rigidement à ce piston éjecteur et l'élément femelle un tube de centrage fixé rigidement au deuxième organe.

Le dispositif de commande d'écartement peut être dissocié des moyens de liaison déverrouillables par lesquels les deux organes sont normalement liés l'un à l'autre ou, au contraire, intégré à ces moyens. Dans ce dernier cas, le mât est avantageusement tubulaire et traversé par les moyens de liaison déverrouillables servant normalement à maintenir les organes en contact l'un avec l'autre.

Selon une application préférentielle de l'invention, le premier organe est un engin spatial tel qu'un lanceur ou une sonde interplanétaire et le deuxième organe un objet à éjecter de cet engin, tel qu'un satellite, une sonde, etc..

Lorsque les moyens d'éjection comprennent un piston éjecteur interposé entre les deux organes, des moyens ralentisseurs sont de préférence prévus de façon à ralentir le piston éjecteur juste avant que les surfaces cylindriques complémentaires perdent le contact simultanément. Cette caractéristique contribue à la maîtrise de l'attitude de l'objet éjecté en permettant de libérer cet objet en douceur.

Lorsque les moyens d'éjection comprennent en outre un ressort de compression interposé entre le piston éjecteur et le premier organe, ce ressort de compression prend de préférence appui sur le premier organe par l'intermédiaire d'une butée à rouleau qui sert également à adoucir la libération du second organe.

On décrira à présent, à titre d'exemples non limitatifs, deux formes de réalisation préférentielles de l'invention, en se référant aux dessins annexés, dans lesquels :
- la figure 1, déjà décrite, illustre très schématiquement la communication d'un mouvement de Poinsot à un objet éjecté d'un engin spatial selon l'art antérieur, au moment où il perd contact avec cet engin spatial ;
- la figure 2 est une vue comparable à la figure 1 illustrant très schématiquement la perte de contact d'un objet éjecté d'un engin spatial par un dispositif de commande d'écartement réalisé selon une première forme de réalisation de l'invention ;
- la figure 3 est une vue en coupe longitudinale illustrant plus en détail un dispositif de commande d'écartement réalisé selon la forme de réalisation de la figure 2 ;
- la figure 4A et la figure 4B sont des vues très schématiques comparables aux figures 1 et 2 illustrant respectivement la position initiale et la position de perte de contact d'un objet éjecté par un dispositif de commande d'écartement réalisé selon une deuxième forme de réalisation de l'invention ; et
- la figure 5 est une vue en coupe longitudinale comparable à la figure 3 représentant le dispositif de commande d'écartement utilisé dans la forme de réalisation des figures 4A et 4B.

La forme de réalisation de l'invention illustrée de façon très schématique sur la figure 2 reprend un certain nombre des dispositions de la technique de commande d'écartement classique décrite précédemment en se référant à la figure 1. Ainsi, le premier organe que constitue l'engin spatial 12 supporte un mât de guidage 14 normalement reçu dans un alésage 16 lié au deuxième organe que constitue l'objet 10, avant l'éjection de cet organe.

Cependant, au lieu de présenter une section uniforme sur toute sa longueur, le mât 14 comporte un épaulement 18 qui partage sa surface périphérique en une surface cylindrique 20 de section circulaire et de relativement petit diamètre et une surface cylindrique 22 de section circulaire et de relativement grand diamètre par rapport à la surface 20. Plus précisément, les surfaces cylindriques 20 et 22 sont coaxiales et étagées et la surface 20 entoure la partie terminale du mât 14, alors que la surface 22 entoure la partie du mât 14 attenante à l'engin spatial 12.

De façon comparable, l'alésage 16 comporte une surface cylindrique de fond 26, de section circulaire et de relativement petit diamètre et une surface cylindrique 28, de section circulaire, tournée vers l'extérieur de l'alésage et de relativement grand diamètre par rapport à la surface cylindrique 26.

Les surfaces cylindriques 20 et 26 d'une part, 22 et 28 d'autre part ont des diamètres égaux. Elles forment donc deux paires de surfaces cylindriques complémentaires étagées qui coulissent les unes dans les autres lors de l'éjection de l'objet 10.

De plus, l'agencement relatif entre ces différentes surfaces cylindriques est tel que, lorsque l'objet 10 est éjecté, la perte de contact des surfaces 20 et 26 d'une part et des surfaces 22 et 28 d'autre part s'effectue simultanément, comme l'illustre la figure 2. Du fait de cette perte de contact simultanée, une éventuelle flexion F du mât 14 intervenant à cet instant est transmise à la fois en deux points différents de l'objet 10, écartés l'un de l'autre selon la direction d'éjection D de l'objet 10. Par conséquent, au lieu d'engendrer un mouvement de rotation transverse de l'objet 10 autour de son centre de gravité G, comme dans l'art antérieur, la flexion du mât 14 se traduit par un simple mouvement de translation transverse illustré par la flèche T sur la figure 2. Il se dégage immédiatement un jeu radial important garantissant l'absence de tout contact entre le mât 14 soumis à des oscillations et l'objet 10 éjecté. Ceci évite toute transmission d'impulsion, loin du centre de gravité de l'objet, qui engendrerait une rotation transverse très importante.

L'attitude de l'objet 10 expulsé à l'aide d'un dispositif de commande d'écartement ainsi conçu est donc maîtrisée de façon presque parfaite. A titre d'illustration, la vitesse de rotation transverse induite par un dispositif classique tel qu'illustré schématiquement par la figure 1 est voisine de 30°/s, alors que cette vitesse est limitée à environ 1°/s à l'aide du dispositif illustré schématiquement sur la figure 2.

Un dispositif de commande d'écartement conforme à l'invention et fonctionnant selon le principe qui vient d'être exposé en se référant à la figure 2 va à présent être décrit en se référant à la figure 3.

Sur cette figure, on voit que l'objet 10 comporte une partie en saillie 30, de forme tubulaire, qui pénètre normalement dans un boîtier tubulaire 32, solidaire de l'engin spatial 12, lorsque l'objet 10 est relié à l'engin spatial 12 par des moyens de liaison déverrouillables tels que ceux qui seront décrits ultérieurement.

La partie en saillie 30 de l'objet 10 est vissée sur un tube de guidage étagé 34 dont la surface intérieure comporte l'alésage étagé 16 décrit précédemment en se référant à la figure 2. Cet agencement permet de fixer rigidement à l'objet 10 le tube de guidage 34 portant cet alésage étagé 16.

De façon plus précise, la fixation du tube de guidage 34 dans la partie en saillie 30 est assurée en vissant un filetage 36 formé sur le tube de guidage 34 dans un taraudage complémentaire formé dans la partie en saillie 30, jusqu'à la venue en butée d'une partie épaulée du tube de guidage 34 contre un épaulement 38 prévu à cet effet dans la partie en saillie 30.

Le boîtier tubulaire 32 est fixé rigidement à l'engin spatial 12 par l'intermédiaire d'un support 40, normalement placé en face de l'extrémité de la partie en saillie 30. Dans sa partie centrale, ce support 40 porte le mât de guidage 14 normalement reçu dans l'alésage étagé 16. Le mât de guidage 14 est coaxial au boîtier tubulaire 32 et orienté perpendiculairement au support 40.

Comme on l'a exposé précédemment en se référant à la figure 2, le mât de guidage 14 coopère avec le tube de guidage 34 par deux paires de surfaces cylindriques complémentaires étagées à bases circulaires et de diamètres différents. Ces surfaces cylindriques complémentaires assurent le guidage de l'objet 10 lors de son éjection, parallèlement à la direction d'éjection D (figure 2) c'est-à-dire dans le sens de la force exercée sur l'objet lors de son éjection. Par conséquent, les génératrices de ces surfaces cylindriques sont parallèles à cette direction et à cette force, qui coïncident avec l'axe commun au mât de guidage 14 et au boîtier tubulaire 32.

Conformément à l'invention, les deux paires de surfaces cylindriques complémentaires formées sur le mât de guidage 14 et dans l'alésage étagé 16 présentent les caractéristiques décrites précédemment en se référant à la figure 2, c'est-à-dire qu'elles perdent leur contact simultanément lorsque l'objet 10 est éjecté. Un jeu radial suffisamment important apparaît alors instantanément entre le mât 14 et l'alésage étagé 16, de telle sorte que tout risque d'interférence ultérieure entre ces deux pièces, susceptible d'engendrer une vitesse de rotation transverse de l'objet 10, est empêché.

Dans l'exemple de réalisation illustré sur la figure 3, les surfaces cylindriques complémentaires de la première paire et de la deuxième paire se chevauchent sur une certaine longueur du mât de guidage 14 et de l'alésage étagé 16. Ce recouvrement permet d'assurer un guidage efficace de l'objet 10 lors de son éjection sans que la présence de deux paires de surfaces de guidage n'accroisse de façon trop importante l'encombrement du dispositif dans le sens de l'axe du mât 14.

Concrètement, ce recouvrement est obtenu en réalisant le mât de guidage 14 en trois parties successives. Ainsi, en partant de son extrémité, le mât 14 comporte une première partie cylindrique 14a, de relativement petit diamètre, puis une partie intermédiaire cannelée 14b, et enfin une deuxième partie cylindrique 14c, de relativement grand diamètre. Le diamètre de la première partie cylindrique 14a est inférieur au diamètre de la deuxième partie cylindrique 14c du mât de guidage 14. De plus, le diamètre de la partie intermédiaire cannelée 14b du mât est égal au diamètre de la première partie cylindrique 14a entre les cannelures et égal au diamètre de la deuxième partie cylindrique 14c sur les cannelures.

Grâce à cet agencement, la surface cylindrique 20 du mât de guidage 14 est formée sur la première partie cylindrique 14a de ce mât et se prolonge entre les cannelures de la partie intermédiaire cannelée 14b, alors que la surface cylindrique 22 du mât de guidage 14 est formée sur la deuxième partie cylindrique 14c du mât et se prolonge sur les cannelures de la partie intermédiaire cannelée 14b.

Afin d'éviter un risque de coincement lors de l'éjection de l'objet 10, les surfaces cylindriques 26 et 28 de l'alésage 16 qui sont en contact avec les surfaces cylindriques 20 et 22 respectivement sont des surfaces de petites longueurs.

Plus précisément, la surface cylindrique 26 qui est normalement en contact avec la surface cylindrique 20 est pourvue d'autant de rainures longitudinales (non représentées) que la partie intermédiaire cannelée 14b du mât de guidage 14 comporte de cannelures. A titre d'exemple, si la partie intermédiaire cannelée 14b comporte trois cannelures, celles-ci sont normalement reçues dans trois rainures longitudinales formées dans la surface cylindrique 26.

Si l'on désire engendrer un mouvement de spin de l'objet 10 lors de son éjection, la largeur des rainures formées dans la surface cylindrique 26 est sensiblement supérieure à la largeur des cannelures de la partie intermédiaire cannelée 14b, afin d'autoriser une rotation du tube de guidage 34 par rapport au mât de guidage 14 lors de l'éjection. Dans ce cas, le mouvement de spin peut notamment être engendré en usinant sur la surface cylindrique 20 du mât de guidage 14 une rainure hélicoïdale 42 formant un moyen de guidage hélicoïdal et dans laquelle est reçu un doigt (non représenté) faisant saillie radialement vers l'intérieur à partir de la surface cylindrique 26.

Par ailleurs, la surface cylindrique 28 est formée à l'extrémité ouverte de l'alésage étagé 16, de façon à pouvoir coulisser sur toute la longueur de la surface cylindrique 22 lors de l'éjection.

Afin que les deux paires de surfaces cylindriques complémentaires perdent le contact simultanément lors de l'éjection, comme on l'a décrit précédemment en se référant à la figure 2, la distance qui existe avant l'éjection entre l'extrémité de la surface cylindrique 26 tournée vers l'extrémité ouverte de l'alésage 16 et l'extrémité de la surface cylindrique 20 tournée vers l'extrémité du mât de guidage 14 est précisément égale à la distance qui sépare alors l'extrémité de la surface cylindrique 28 tournée vers l'extrémité de l'alésage 16 de l'extrémité de la surface cylindrique 22 tournée vers l'extrémité du mât de guidage 14.

L'objet 10 est normalement maintenu dans la position illustrée sur la figure 3, c'est-à-dire relié rigidement à l'engin spatial 12, par des moyens de liaison déverrouillables qui peuvent être selon le cas indépendants du dispositif de commande d'écartement ou intégrés à ce dispositif. Dans l'exemple de réalisation illustré sur la figure 3, ces moyens de liaison déverrouillables sont intégrés au dispositif de commande d'écartement. Ils vont donc être décrits brièvement, bien qu'ils ne fassent pas partie de l'invention.

Les moyens de liaison déverrouillables par lesquels l'objet 10 est normalement bridé sur l'engin spatial 12 comprennent dans ce cas une tige de liaison 44 qui traverse sur toute sa longueur le mât de guidage 14. A cet effet, ce dernier présente une configuration tubulaire.

A son extrémité tournée vers l'engin spatial 12, la tige de liaison 44 comporte une partie filetée 46, normalement emprisonnée dans un écrou segmenté 48 qui prend appui dans un boîtier 49 assujetti au support 40. Un ressort faiblement taré 50, logé dans le mât de guidage tubulaire 14, est interposé entre le boîtier 49 et une collerette 52 formée sur la tige de liaison 44.

A son extrémité opposée, la tige de liaison 44 supporte un manchon 54. Plus précisément, ce manchon 54 est apte à tourner sur la tige de liaison 44 tout en étant immobilisé en translation par rapport à cette dernière. Sur sa surface extérieure, le manchon 54 comporte une rainure hélicoïdale 56 dans laquelle est reçu un doigt 58 qui fait saillie radialement vers l'intérieur à partir du mât de guidage 14. Cet agencement a pour effet de transformer une translation de la tige de liaison 44 par rapport au mât de guidage 14 en une rotation du manchon 54.

A son extrémité tournée vers l'objet 10, le manchon 54 fait saillie au travers d'une fenêtre 63 formée dans l'extrémité correspondante du tube de guidage 34 et comporte une ou plusieurs branches 60 orientées radialement vers l'extérieur. Ces branches 60 prennent appui sur la face d'extrémité 61 du tube de guidage 34 lorsque le manchon 54 occupe sa position angulaire correspondant à la position rétractée de verrouillage de la tige de liaison 44 dans le mât de guidage 14 illustrée sur la figure 3.

En revanche, une rotation du manchon 54 provoquée par un déplacement de la tige de liaison 44 vers l'extrémité du mât de guidage 14, c'est-à-dire vers une position en saillie de déverrouillage de cette tige 44, a pour effet d'amener les branches radiales 60 en face de la fenêtre 63 formée dans l'extrémité du tube de guidage 34 tournée vers l'objet 10. Cette fenêtre 63 présente une forme complémentaire de celle de l'extrémité du manchon 54 portant les branches 60, de telle sorte que cette extrémité peut alors traverser librement l'extrémité du tube de guidage 34. Cette position correspond au déverrouillage des moyens de liaison, c'est-à-dire qu'elle permet de séparer l'objet 10 de l'engin spatial 12 par un coulissement du tube de guidage 34 sur le mât de guidage 14.

Le passage de la tige de liaison 44 de sa position rétractée de verrouillage à sa position en saillie de déverrouillage est commandé par le ressort 50, lorsque l'extrémité filetée 46 de la tige de liaison est libérée de l'écrou segmenté 48. L'écrou segmenté 48 est maintenu normalement en prise sur l'extrémité filetée 46 de la tige de liaison 44 par un mécanisme (non représenté) logé dans le boîtier 49. La libération de ce mécanisme peut être commandée par un système initiateur (non représenté) monté dans le boîtier 49 et qui peut être de nature quelconque, par exemple pyrotechnique.

Le dispositif de commande d'écartement selon l'invention comporte en outre des moyens d'éjection permettant de commander l'éjection de l'objet 10 par rapport à l'engin spatial 12 lorsque les moyens de liaison qui relient normalement ces deux organes sont déverrouillés. Ces moyens d'éjection sont logés entre le support 40 et l'extrémité de la partie en saillie 30 de l'objet 10, à l'intérieur du boîtier tubulaire 32.

Dans la forme de réalisation illustrée sur la figure 3, les moyens d'éjection comprennent un piston éjecteur 64 monté coulissant dans le boîtier tubulaire 32 de façon à être normalement en appui contre la face d'extrémité du tube de guidage 34 solidaire rigidement de l'objet 10,, lorsque les moyens de liaison sont verrouillés. Ce piston éjecteur 64 est un piston annulaire disposé coaxialement autour du mât de guidage 14, sans contact avec ce dernier. Il comporte une jupe centrale 65 normalement emprisonnée entre le support 40 et l'extrémité adjacente du tube de guidage 34.

Les moyens d'éjection comportent en outre, un ressort hélicoïdal de compression 66 dont une extrémité prend appui sur le support 40 par l'intermédiaire d'une butée à rouleau 68 et dont l'extrémité opposée prend appui sur une face du piston éjecteur 64 tournée vers ce support 40.

Dans l'exemple de réalisation préférentielle illustré sur la figure 3, des moyens ralentisseurs sont associés au piston éjecteur 64, afin que la vitesse de ce dernier soit ralentie juste avant que les surfaces cylindriques complémentaires du mât de guidage 14 et de l'alésage étagé 16 perdent contact simultanément lors de l'éjection de l'objet 10. Ceci évite le choc dur de fin de course entre le piston 64 et les bras 76, lorsque l'objet 10 est toujours en contact avec le mât 14, qui ne se produit que lorsque le jeu radial entre le mât 14 et l'objet 10 est acquis (voir plus loin). Le contrôle de la force d'éjection obtenu grâce à ces moyens ralentisseurs contribue à la maîtrise de l'attitude de l'objet 10 après son éjection.

Sur la figure 3, ces moyens ralentisseurs comprennent un ressort hélicoïdal de compression 70, à faible course, placé autour du piston éjecteur 64 et dont les extrémités sont normalement en appui contre deux épaulements en vis-à-vis formés sur ce piston. Plus précisément, l'extrémité du ressort de compression 70 tournée vers l'objet 10 est en appui sur l'un des épaulements précités par l'intermédiaire d'une bague 72.

Une ou plusieurs entailles 74 sont formées dans la partie du piston éjecteur 64 tournée vers l'objet 10, en face de la bague 72. A son extrémité tournée vers l'objet 10, le boîtier tubulaire 32 comporte autant de bras 76 que le piston éjecteur 64 comporte d'entailles 74. Ces bras 76 sont placés en face des entailles 74 de façon à pouvoir venir en appui contre la bague 72 lors de l'éjection de l'objet 10.

Afin que l'amortissement assuré par le ressort de compression hélicoïdal 70 puisse intervenir juste avant que les surfaces cylindriques complémentaires du mât de guidage 14 et de l'alésage 16 perdent le contact, la distance qui sépare la bague 72 des bras 76 lorsque l'objet 10 est relié à l'engin spatial par les moyens de liaison déverrouillables est légèrement inférieure à la course dont disposent les surfaces cylindriques 26 et 28 sur les surfaces cylindriques 20 et 22, respectivement.

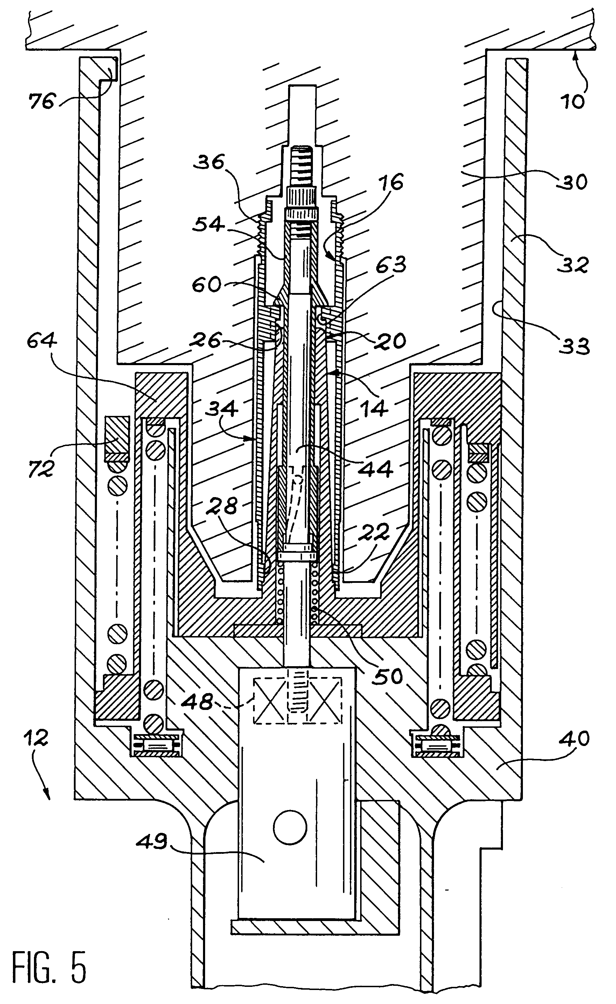

Dans la première forme de réalisation de l'invention qui vient d'être décrite en se référant aux figures 2 et 3, la direction d'éjection D de l'objet 10 est déterminée par la coopération de l'alésage étagé 16 avec le mât de guidage 14. Dans une deuxième forme de réalisation de l'invention qui va à présent être décrite en se référant aux figures 4A, 4B et 5, la direction d'éjection est communiquée à l'objet 10 par le piston éjecteur.

Dans ce cas et comme l'illustrent très schématiquement les figures 4A et 4B, le piston éjecteur 64 coopère étroitement par sa surface extérieure avec une surface de guidage 33 formée dans le boîtier tubulaire 32. Au lieu d'être fixé rigidement sur l'engin spatial 12, le mât 14 est alors solidaire du piston éjecteur 64 et sert essentiellement à centrer l'objet 10 à éjecter par rapport au piston éjecteur 64 (figure 4A). Par conséquent, il ne se produit un déplacement relatif entre le piston 64 et l'objet 10 que lorsque le piston éjecteur arrive en fin de course, tel qu'illustré sur la figure 4B.

Conformément à l'invention, cette coopération de centrage entre l'objet 10 et le mât 14 est réalisée par l'intermédiaire de deux paires de surfaces cylindriques complémentaires qui perdent le contact simultanément lorsque l'objet est éjecté. Ces surfaces cylindriques sont désignées ici encore par les références 20 et 22 pour le mât 14 et 26 et 28 pour l'alésage 16. Comme dans la première forme de réalisation décrite précédemment, on garantit ainsi une très bonne maîtrise de l'attitude de l'objet éjecté, en évitant que les vibrations et les chocs engendrés lors de l'éjection ne transmettent à l'objet 10 une vitesse de rotation transverse.

La figure 5 illustre un exemple de mise en oeuvre de la deuxième forme de réalisation de l'invention qui vient d'être décrite en se référant aux figures 4A et 4B. Etant donné que cette forme de réalisation présente de nombreuses caractéristiques analogues à celles de la première forme de réalisation décrite, seules les parties notablement différentes seront décrites.

Le piston éjecteur 64 est monté coulissant et guidé dans la surface de guidage 33 du boîtier tubulaire 32, de façon à transmettre à l'objet 10 une force d'éjection selon une direction bien déterminée. Dans sa partie centrale, le piston éjecteur 64 porte le mât 14, qui constitue dans ce cas un mât de centrage sur lequel est normalement emboîté le tube de centrage 34 vissé à l'intérieur de la partie en saillie 30 de l'objet 10.

Dans cette forme de réalisation, les surfaces cylindriques à base circulaire et de diamètres différents prennent la forme d'une portée cylindrique 20 de relativement petit diamètre prévue à l'extrémité du mât 14 et d'une portée cylindrique 22 de relativement grand diamètre prévue à la base du mât 14.

Chacune des portées cylindriques 20 et 22 est normalement emboîtée, sur une très faible longueur, strictement identique, dans des portées cylindriques 26 et 28 prévues respectivement dans le fond et à l'extrémité de l'alésage 16 ménagé dans le tube 34.

Les moyens de liaison déverrouillables sont par ailleurs comparables à ceux qui ont été décrits précédemment en se référant à la figure 3.

L'intégration des dispositifs de commande d'écartement décrits en se référant aux figures 3 et 5, de même que leur fonctionnement sont comparables.

Ainsi, pour réaliser l'intégration du dispositif, le tube 34 est monté sur le mât 14 et verrouillé sur ce dernier par le manchon 54, du fait que la tige de liaison 44 est maintenue en position rétractée par l'écrou fractionné 48. Dans la forme de réalisation de la figure 3, l'extrémité du tube 34 tournée vers le support 40 est alors en appui contre la jupe 65 du piston éjecteur 64, de telle sorte que le ressort hélicoïdal de compression 66 est comprimé.

La partie en saillie 30 de l'objet 10 est ensuite introduite dans le boîtier tubulaire 32 et le dispositif de commande d'écartement est vissé par son filetage 36 dans cette partie en saillie 30.

Enfin, le support 40 est fixé rigidement à l'engin spatial 12.

Lorsque l'éjection de l'objet 10 est commandée, le système initiateur logé dans le boîtier 49 est actionné. cela a pour effet de séparer les différents segments de l'écrou 48. La tige de liaison 44 est alors dissociée du support 40 et tend à s'écarter de celui-ci sous l'action du ressort de compression 50. Un mouvement de translation relative se produit alors entre la tige de liaison 44 et le mât 14. Il en résulte une rotation du manchon 54 qui amène progressivement les branches 60 en face de la fenêtre complémentaire 63 formée dans le tube 34. Le dispositif de commande d'écartement peut alors entrer en action.

Dans la première forme de réalisation de l'invention illustrée par les figures 2 et 3, le piston éjecteur 64 pousse la partie en saillie 30 de l'objet 10 dans la direction d'éjection définie par l'axe du mât de guidage 14, en faisant coulisser le tube de guidage 34 le long de ce mât. Vers la fin de ce coulissement, la bague 72 arrive en butée contre les bras 76, de telle sorte que l'effet d'amortissement du ressort de compression hélicoïdal 70 se produit, juste avant que le contact des deux paires de surfaces cylindriques de l'alésage étagé 16 et du mât de guidage 14 cesse simultanément.

L'objet 10 est ainsi éjecté de l'engin spatial 12 dans la direction d'éjection définie par le mât 14 sans qu'une vitesse de rotation transverse notable ne soit communiquée à cet objet. Le cas échéant, un mouvement de spin tendant à faire tourner l'objet 10 autour de l'axe de l'alésage étagé 16 est également communiqué à l'objet.

Dans la forme de réalisation illustrée sur les figures 4A, 4B et 5, la partie en saillie 30 de l'objet 10 ainsi que le tube 34 et le mât 14 se déplacent avec le piston éjecteur 64 dès que les moyens de liaison sont déverrouillés. Il ne se produit donc pas à ce moment de déplacement relatif entre le tube 34 et le mât 14.

Lorsque la bague 72 arrive en butée contre les bras 76, le piston éjecteur 64 est ralenti. L'objet 10 conserve, en revanche, sa vitesse d'éjection. Les surfaces cylindriques 26 et 28 s'échappent alors simultanément des surfaces cylindriques 20 et 22 formées sur le mât 14 avant que les spires du ressort 70 soient jointives et communiquent le choc de fin de course à l'objet 10. Le piston éjecteur 64 est alors stoppé et l'objet 10 poursuit seul sa course dans la direction d'éjection qui lui a été communiquée par le dispositif. Par conséquent, l'éjection de l'objet 10 s'effectue comme précédemment pratiquement sans communiquer de vitesse de rotation transverse à cet objet.

Comme on l'a déjà mentionné, les moyens de liaison déverrouillables ne font pas partie de l'invention et peuvent être réalisés d'une manière quelconque, soit à l'intérieur du dispositif de commande, soit indépendamment de celui-ci.

## Revendications

1. Dispositif de commande d'écartement de deux organes (10,12) normalement maintenus en contact l'un avec l'autre, ce dispositif comprenant des moyens d'éjection (64,66) aptes à appliquer entre les organes une force tendant à les écarter l'un de l'autre, lesdits organes (10,12) étant normalement en contact par au moins deux paires de surfaces cylindriques à ladite force, caractérisé par le fait que les deux paires de surfaces cylindriques complémentaires sont agencées de façon à perdre contact simultanément lors d'une mise en oeuvre des moyens d'éjection (64,66).

2. Dispositif selon la revendication 1, caractérisé par le fait que les surfaces cylindriques complémentaires (20,22 ; 26,28) ont des bases circulaires de diamètres différents, d'une paire à l'autre.

3. Dispositif selon la revendication 2, caractérisé par le fait que chaque paire de surfaces cylindriques complémentaires comprend une première surface (20,22) formée sur un élément mâle (14) lié à un premier (12) desdits organes et une deuxième surface (26,28) formée sur un élément femelle (34) lié au deuxième organe (10).

4. Dispositif selon la revendication 3, caractérisé par le fait que l'élément mâle forme un mât de guidage (14) fixé rigidement au premier organe (12) et l'élément femelle un tube de guidage (34) fixé rigidement au deuxième organe (10).

5. Dispositif selon la revendication 4, caractérisé par le fait qu'il comprend deux paires de surfaces cylindriques complémentaires étagées, la première surface (20) de l'une des paires étant formée sur une première partie cylindrique (14a), de relativement petit diamètre, du mât de guidage (14) et se prolongeant entre des cannelures d'une partie intermédiaire cannelée (14b) du mât de guidage (14), alors que la première surface (22) de l'autre paire est formée sur une deuxième partie cylindrique (14c), de relativement grand diamètre, du mât de guidage et se prolonge sur lesdites cannelures.

6. Dispositif selon l'une quelconque des revendications 4 et 5, caractérisé par le fait que le mât de guidage (14) coopère avec le tube de guidage (34) par des moyens de guidage hélicoïdal (42).

7. Dispositif selon la revendication 3, caractérisé par le fait que les moyens d'éjection comprennent un piston éjecteur (64) monté coulissant sur le premier organe (12), l'élément mâle formant un mât de centrage (14) fixé rigidement à ce piston éjecteur et l'élément femelle un tube de centrage (34) fixé rigidement au deuxième organe (10).

8. Dispositif selon l'une quelconque des revendications 4 à 7, caractérisé par le fait que le mât (14) est tubulaire et traversé par des moyens de liaison déverrouillables (44,48,60) maintenant normalement lesdits organes (10,12) en contact l'un avec l'autre.

9. Dispositif selon l'une quelconque des revendications 3 à 8, caractérisé par le fait que le premier organe est un engin spatial (12) et le deuxième organe un objet (10) à éjecter de cet engin.

10. Dispositif selon l'une quelconque des revendications précédentes, caractérisé par le fait que les moyens d'éjection comprennent un piston éjecteur (64) interposé entre les deux organes (10,12) et des moyens ralentisseurs (70) agencés de façon à ralentir le piston éjecteur juste avant que les surfaces cylindriques complémentaires (20,21 ; 26,28) perdent le contact simultanément.

11. Dispositif selon la revendication 10, caractérisé par le fait que les moyens d'éjection comprennent de plus un ressort de compression (66) interposé entre le piston éjecteur (54) et le premier organe (12) et prenant appui sur ce dernier par l'intermédiaire d'une butée à rouleaux (68).

## Claims

1. Device for the spacing control of two members (10, 12) normally maintained in contact with one another, said device comprising ejection means (64, 66) able to apply between the members a force tending to move them apart, said members (10, 12) being normally in contact by at least two pairs of complementary cylindrical surfaces (20, 22; 26, 28) with generatrixes parallel to said force, characterized in that the two pairs of complementary cylindrical surfaces are arranged in such a way as to simultaneously lose contact during the operation of the ejection means (64, 66).

2. Device according to claim 1, characterized in that the complementary cylindrical surfaces (20, 22; 26, 28) have circular bases with different diameters between the individual pairs.

3. Device according to claim 2, characterized in that each pair of complementary cylindrical surfaces consists of a first surface (20, 22) formed on a male element (14) connected to a first (12) of said members and a second surface (26, 28) formed on a female element (34) connected to the second member (10).

4. Device according to claim 3, characterized in that the male element forms a guide mast (14) fixed rigidly to the first member (12) and the female element a guide tube (34) rigidly fixed to the second member (10).

5. Device according to claim 4, characterized in that it comprises two pairs of complementary cylindrical surfaces, the first surface (20) of one of the pairs being formed on a first cylindrical portion (14a) with a relatively small diameter of the guide mast (14) and is extended between the splines of a splined intermediate portion (14b) of the guide mast (14), whereas the first surface (22) of the other pair is formed on a second cylindrical portion (14c) with a relatively large diameter of the guide mast and is continued over said splines.

6. Device according to either of the claims 4 and 5, characterized in that the guide mast (14) cooperates with the guide tube (34) by helical guidance means (34).

7. Device according to claim 3, characterized in that the ejection means comprise an ejector piston (64) mounted in sliding manner on the first member (12), the male element forming a centring mast (14) rigidly fixed to said ejector piston and the female element a centring tube (34) rigidly fixed to said second member (10).

8. Device according to any one of the claims 4 to 7, characterized in that the mast (14) is tubular and traversed by unlockable connecting means (44, 48, 60) normally maintaining said members (10, 12) in contact with one another.

9. Device according to any one of the claims 3 to 8, characterized in that the first member is a spacecraft (12) and the second member an object (10) to be ejected from said spacecraft.

10. Device according to any one of the preceding claims, characterized in that the ejection means comprise an ejector piston (64) interposed between the two members (10, 12) and decelerating means (70) arranged so as to decelerate the ejector piston just before the complementary cylindrical surfaces (20, 21; 26, 28) simultaneously lose contact.

11. Device according to claim 10, characterized in that the ejection means also comprise a compression spring (66) interposed between the ejector piston (64) and the first member (12) and bear on the latter by means of a roll abutment (68).

## Patentansprüche

1. Steuervorrichtung zur Trennung zweier Organe (10, 12), die normalerweise in Kontakt miteinander gehalten werden, wobei diese Vorrichtung Aussetzeinrichtungen (64, 66) umfaßt, die zwischen den Organen eine Kraft ausüben, die bestrebt ist, sie voneinander zu trennen, und die genannten Organe (10, 12) normalerweise Kontakt haben durch wenigstens zwei Paare komplementärer zylindrischer Flächen (20,22; 26,28) mit zu der genannten Kraft parallelen Mantellinien,
**dadurch gekennzeichnet,**
daß die beiden komplementären zylindrischen Flächenpaare so angeordnet sind, daß sie bei einer Benutzung der Aussetzeinrichtungen (64,66) simultan Kontakt verlieren.

2. Vorrichtung nach Anspruch 1, dadurch gekennzeichnet, daß die komplementären zylindrischen Flächen (20,22; 26,28) runde Basen bzw. Grundrisse mit von Paar zu Paar unterschiedlichen Durchmessern haben.

3. Vorrichtung nach Anspruch 2, dadurch gekennzeichnet, daß jedes Paar mit komplementären zylindrischen Flächen eine erste Fläche (20,22) umfaßt, gebildet durch das Steckelement (14), das zu einem ersten (12) der genannten Organe gehört, und eine zweite Fläche (26,28), gebildet durch das Aufnahmeelement (34), enthalten in dem zweiten Organ (10).

4. Vorrichtung nach Anspruch 3, dadurch gekennzeichnet, daß das Steckelement einen starr mit dem ersten Organ (12) verbundenen Führungsmast (14) bildet und das Aufnahmeelement ein starr mit dem zweiten Organ (10) verbundenes Führungsrohr (34).

5. Vorrichtung nach Anspruch 4, dadurch gekennzeichnet, daß sie zwei abgestufte komplementäre zylindrische Flächenpaare umfaßt, wobei die erste Fläche (20) von einem der Paare auf einem ersten zylindrischen Teil (14a) relativ kleinen Durchmessers des Führungsmasts (14) ausgebildet ist und sich zwischen Rippen eines gerippten Zwischenteils (14b) des Führungsmasts (14) ausdehnt, während die erste Fläche (22) des anderen Paars auf einem zweiten zylindrischen Teil (14c) relativ großen Durchmessers des Führungsmasts ausgebildet ist und sich auf den genannten Rippen ausdehnt.

6. Vorrichtung nach einem der Ansprüche 4 und 5, dadurch gekennzeichnet, daß der Führungsmast (14) mit dem Führungsrohr (34) durch spiral- bzw. schraubenförmige Führungseinrichtungen (42) zusammenwirkt.

7. Vorrichtung nach Anspruch 3, dadurch gekennzeichnet, daß die Aussetzeinrichtungen einen Aussetzkolben (64) umfassen, gleitend auf dem ersten Organ (12) angebracht, wobei das starr auf diesem Aussetzkolben befestigte Steckelement einen Zentrierungsmast (14) bildet und das Aufnahmeelement ein starr auf dem zweiten Organ (10) befestigtes Zentrierungsrohr (34) bildet.

8. Vorrichtung nach einem der Ansprüche 4 bis 7, dadurch gekennzeichnet, daß der Mast röhrenförmig ist und von entriegelbaren Verbindungseinrichtungen (44,48,60) durchquert wird, die die genannten Organe (10,12) normalerweise in Kontakt miteinander halten.

9. Vorrichtung nach einem der Ansprüche 3 bis 8, dadurch gekennzeichnet, daß das erste Organ ein Raumfahrzeug (12) ist und das zweite Organ ein von diesem Raumfahrzeug auszusetzendes Objekt (10).

10. Vorrichtung nach einem der vorangehenden Ansprüche, dadurch gekennzeichnet, daß die Aussetzeinrichtungen einen Aussetzkolben (64) umfassen, eingebaut zwischen den beiden Organen (10,12), und Verzögerungseinrichtungen (70), derart angeordnet, daß sie den Aussetzkolben abbremsen, unmittelbar ehe die komplementären zylindrischen Flächen (20,21; 26,28) simultan den Kontakt verlieren.

11. Vorrichtung nach Anspruch 10, dadurch gekennzeichnet, daß die Aussetzeinrichtungen zudem eine Druckfeder (66) umfassen, eingebaut zwischen dem Aussetzkolben (54) und dem ersten Organ (12), die sich mittels eines Wälzlagers (68) auf diesem letzteren abstützt.
